# EUROPEAN PATENT SPECIFICATION

(11) **EP 4 169 975 B1**
(45) Date of publication and mention of the grant of the patent: **20.12.2023**
(21) Application number: 22166723.1
(22) Date of filing: 05.04.2022
(51) Int. Cl.: C08J 9/00, C08J 9/12, C08J 9/18, C08J 9/224, C08J 9/232

(54) **PROCESS FOR PRODUCING RESIN EXPANDED BEADS**
VERFAHREN ZUR HERSTELLUNG VON HARZEXPANDIERTEN PERLEN
PROCÉDÉ DE PRODUCTION DE BILLES EXPANSÉES DE RÉSINE

(30) Priority: 22.10.2021 JP 2021172951
(43) Date of publication of application: 26.04.2023
(73) Proprietor: JSP Corporation, Tokyo 100-0005 (JP)
(72) Inventor: HIRA, Akinobu, Mie, 510-0881 (JP)
(74) Representative: Mai Besier

(56) References cited:
- EP-A1- 2 072 207
- EP-A1- 3 854 562
- US-B2- 9 669 600

## Description

### BACKGROUND OF THE INVENTION

The present invention relates to a process for producing resin expanded beads and, more particularly, to a process for producing resin expanded beads containing a recycled fishery material as a raw material.

In recent years, marine pollution caused by plastic wastes is becoming more and more serious. The plastic wastes include those that were discarded after being used in fishery operations or fishing, and the resulting marine pollution is also serious. For example, when fishery nets, fishing lines, ropes or the like used for fishing operations in the ocean or rivers are cut off during use, they may be left uncared for and drift in the ocean or rivers. Thus, it has become a social problem how to dispose these wastes.

Plastic wastes are also generated in set net fishing. Set net fishing is a fishing method in which fishes are caught by setting up fence nets, playground nets, funnel nets, box nets and vault nets in the fish migration path. Fishes are guided through the fence nets, playground nets, funnel nets and box nets to the vault nets. The fishery nets for set net fishing and the sinker ropes therefor, in particular, have weights, such as lead, woven into them to adjust their buoyancy. Thus, it has also become a problem how to collect plastic wastes containing lead and other substances.

Also, fishery net manufacturing factories generate wastes such as fishery net scraps during the production of new fishery nets. The factories also repair fishery nets, and wastes such as fishery net scraps are also generated when fishery nets are repaired. The wastes such as fishery nets scraps generated by the fishery nets manufactures are useless. However, there has been no appropriate way to reuse them, and they may be discarded as wastes. An effective way to use them is being sought.

### SUMMARY OF THE INVENTION

The present invention has been made in view of these problems, and it is, therefore, an objective problem of the present invention to provide a process for effectively using a polyolefin-based resin material among synthetic resin materials contained in recycled fishery materials such as fishery nets, fishery ropes, and fishing lines. The present invention is also aimed at the provision of a process for producing resin expanded beads that have excellent in-mold moldability and are capable of molding a foamed molded article having excellent physical properties in spite of using a recycled fishery material.

In accordance with the present invention, there is provided a process for producing resin expanded beads as follows:
[1] A process for producing resin expanded beads, comprising the steps of:
   (a) melt-mixing a propylene-based random copolymer (I) having a melting point of 120°C or more and a recycled polyolefin-based resin (II) having a melting point of 125 to 170°C to obtain a molten resin mixture,
   (b) processing the molten resin mixture into resin particles , and
   (c) expanding the resin particles,

   wherein said recycled polyolefin-based resin (II) originates from a recycled fishery material selected from fishery nets, fishing lines, fishery ropes and mixtures of two or more thereof and is in the form of pellets having an ash content of 3% by mass or less, and
   wherein in step (a) 40 to 95% by mass of the propylene-based random copolymer (I) is mixed with 5 to 60% by mass of the recycled polyolefin-based resin (II) with the proviso that the total of the propylene-based random copolymer (I) and the recycled polyolefin-based resin (II) is 100% by mass;
[2] The process for producing resin expanded beads according to above [1], wherein the propylene-based random copolymer (I) has a melt flow rate of 1 to 10 g/10 min as measured at a temperature of 230°C and a load of 2.16 kg, and the recycled polyolefin-based resin (II) has a melt flow rate that is lower than that of the propylene-based random copolymer (I) as measured at a temperature of 230°C and a load of 2.16 kg;
[3] The process for producing resin expanded beads according to above [1] or [2], wherein the recycled polyolefin-based resin (II) comprises a high density polyethylene resin having a melting point of 125 to 145°C;
[4] The process for producing resin expanded beads according to any one of above [1] to [3], wherein the resin expanded beads show at least two melting peaks on a first time DSC curve obtained when a measurement sample from the resin expanded beads is heated from 30°C to a first temperature higher by 30°C than a melting peak end temperature at a heating rate of 10°C/min according to heat flux differential scanning calorimetry referenced in JIS K7121(1987), said at least two melting peaks including an intrinsic melting peak that is intrinsic to the base resin constituting the resin expanded beads, and a high temperature peak that has a peak top temperature higher than a peak top temperature of the intrinsic melting peak, and
   wherein the resin expanded beads show the intrinsic melting peak but do not show a high temperature peak on a second time DSC curve obtained when the measurement sample, heated to said first temperature in the first time DSC curve measurement, is maintained at said first temperature for 10 minutes, then cooled to 30°C at a cooling rate of 10°C/min and again heated from 30°C to a second temperature higher by 30°C than a melting peak end temperature at a heating rate of 10°C/min according to heat flux differential scanning calorimetry referenced in JIS K7122(1987);
[5] The process for producing resin expanded beads according to any one of above [1] to [4], wherein step (b) is carried out in such a way that the obtained resin particles are multilayer resin particles each having a core layer containing the propylene-based random copolymer (I) and the recycled polyolefin-based resin (II), and a cover layer containing a polyolefin-based resin (III) and covering the core layer, and wherein in step (c) the core layers of the multilayer resin particles are expanded to give multilayer resin expanded beads;
[6] The process for producing resin expanded beads according to any one of above [1] to [5], wherein in step (c), the resin particles are expanded in such a way that the resin expanded beads have a bulk density of 10 to 100 kg/m³; and
[7] The process for producing resin expanded beads according to any one of above [1] to [6], wherein the propylene-based random copolymer (I) has a melting point of 135 to 160°C.

The present invention makes it possible to reuse recycled fishery materials such as fishery nets, fishing lines and fishery ropes effectively by producing resin expanded beads containing a polyolefin-based resin obtained from the recycled fishery materials. Also, the present invention makes it possible to prevent recycled fishery materials such as fishery nets, fishing lines and fishery ropes from being burned as wastes by reusing them, thereby reducing emission of carbon dioxide. Further, the obtained expanded beads have excellent in-mold moldability and are capable of molding an expanded beads molded article having excellent physical properties.

### BRIEF DESCRIPTION OF THE DRAWINGS

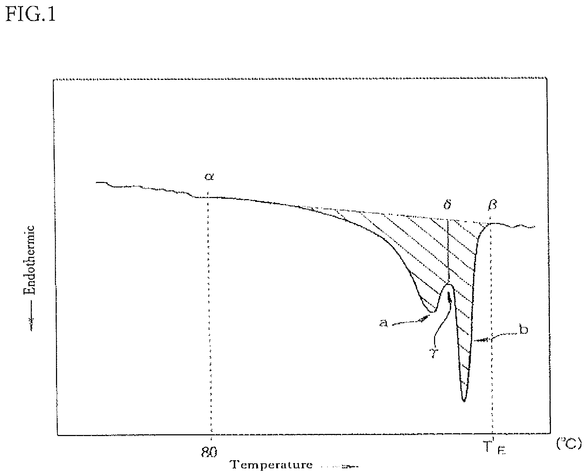

FIG. 1 is a schematic diagram showing an example of a first time DSC curve obtained by heat flux differential scanning calorimetry performed on the expanded beads of the present invention.

### EMBODIMENTS OF THE INVENTION

The process for producing resin expanded beads (hereinafter occasionally referred to simply as "expanded beads") of the present invention includes a melt-mixing step (a), a resin particles forming step (b), and an expanding step (c).

The term "melt-mixing" is well-known procedure for a skilled person in the field and refers to the mixing of two or more polymer components at a temperature above the melting or softening point of one or more of the polymer components.

The melt-mixing step (a) includes melt-mixing a propylene-based random copolymer (I) having a melting point of 120°C or more and a recycled polyolefin-based resin (II) having a melting point of 125 to 170°C to form a molten resin mixture. In a preferred embodiment, the melt-mixing step (a) includes feeding the propylene-based random copolymer (I), the recycled polyolefin-based resin (II) and, if desired one or more with optional additives such as a cell controlling agent and one or more additional resin components, to an extruder, and melting and kneading the fed ingredients in the extruder to form the molten resin mixture.

In the melt-mixing step (a), any conventionally known extruder may be used to melt and knead the ingredients. In performing the melt-mixing in the extruder, it is preferred to homogeneously mix the ingredients before extrusion. The melt-mixing step (a) is preferably performed using a single screw extruder or twin screw extruder equipped with a high-dispersion type screw such as a Dulmage type, Maddock type or Unimelt type screw.

Next, the propylene-based random copolymer (I) having a melting point of 120°C or more is described in detail. The propylene-based random copolymer (I) (hereinafter occasionally referred to simply as "copolymer (I)") is a propylene-based random copolymer containing 50% by mass or more of structural units derived from propylene. Specific examples of the copolymer (I) include random copolymers of propylene with ethylene or an α-olefin having four or more carbon atoms such as propylene-ethylene random copolymers, propylene-butene random copolymers and propylene-ethylene-butene random copolymers; propylene-acrylic acid random copolymers; and propylene-maleic anhydride random copolymers. The copolymer (I) preferably contains 70% by mass or more, more preferably 80% by mass or more, still more preferably 90% by mass more, of structural units derived from propylene.

It is important that the copolymer (I) should have a melting point of 120°C or more in order to obtain expanded beads having excellent moldability and heat resistance. From the standpoint of obtaining expanded beads having excellent heat resistance, the melting point is preferably 125°C or more, more preferably 130°C or more, still more preferably 135°C or more, especially preferably 140°C or more. From the standpoint of desired moldability of the obtained expanded beads, the upper limit of the melting point is approximately 160°C, and is preferably 158°C, more preferably 155°C. The melting point of the copolymer (I) is particularly preferably in the range of 135°C to 160°C.

As used herein, the melting point of a resin is measured by heat flux differential scanning calorimetry in which a test piece is subjected to a predetermined heat treatment according to JIS K7121 (2012), (2) Conditioning of Test Piece. The treated the test piece is heated at a heating rate of 10°C/min to obtain a DSC curve having a melting peak. The peak top temperature of the melting peak is defined as the melting point of the resin. When two or more melting peaks appear, the peak top temperature of the melting peak with the largest area is defined as the melting point.

The propylene-based random copolymer (I) preferably has a bending elastic modulus of 600 MPa or more, more preferably 800 MPa or more, in which case an expanded beads molded article obtained from the expanded beads undergoes less shrinkage immediately after molding and has excellent dimensional accuracy. On the other hand, in order to maintain the shock-absorbing performance of the expanded beads molded article, the copolymer (I) preferably has a bending elastic modulus of 1200 MPa or less, more preferably 1000 MPa or less.

As used herein, the bending elastic modulus is obtained using a test piece (having a length of 80 mm, a width of 10 mm and a thickness of 4 mm) made by injection molding according to JIS K 7171(2016).

Next, the recycled polyolefin-based resin (II) having a melting point of 125 to 170°C is described. The recycled polyolefin-based resin (II) (hereinafter occasionally referred to simply as "recycled resin (II)") originates from a recycled fishery material selected from the group of fishery nets, fishing lines, fishery ropes and mixtures of two or more thereof and is shaped in the form of pellets. Examples of the fishery nets include gill nets, set nets, trawl nets, encircling nets, seaweed nets, culturing nets and crab nets; or longlines, float lines, sinker lines and trap nets. Examples of the fishery ropes include ropes for pearl farming, ropes for seaweed cultivation, ropes constituting parts of fishery nets and ropes for connecting ocean buoys.

Such recycled fishery materials are generated when fishery nets and so on are newly produced or repaired, and may include unused fishery nets or the like. However, the recycled resin (II) preferably originates from fishery plastic wastes collected from fishery nets, fishing lines or fishery ropes which have been used in the sea, river, lake or pond. Generally, fishery plastic wastes which had been used and immersed in sea water for a long time have salt deposited thereon and impregnated therein and have foreign matters such as shells and sea algae attached thereto. Thus, these plastic wastes have conventionally ended up in landfills. It is, therefore, more preferred that the recycled fishery material originates from fishery plastic wastes which had been used in the sea because wastes that end up in landfills can be reduced. The recycled resin (II) may originate from any one kind of fishery nets, fishing lines or fishery ropes, or may originate from two or more kinds thereof.

The recycled fishery material may be pelletized by any conventionally known method. For example, a recycled material in the form of pellets can be obtained by a method including pulverizing the recycled fishery material, heating and kneading the pulverized material in an extruder, extruding the resulting molten resin in the form of strands, cooling the strands by passing them through water, and cutting the stands into pellets.

When the recycled fishery material is pulverized, it is preferred to use a pulverizer to pulverize the material into a form easy to feed to an extruder. As the pulverizer, any known device, such as an ordinary shear pulverizer or impact pulverizer, may be used.

When the recycled fishery material originates from used fishery plastic wastes such as fishery nets, fishing lines and fishery ropes, it is important to remove contaminants therefrom before the production of the recycled resin (II). Specifically, collected fishery plastic wastes are contaminated and have foreign matters, such as metal parts, labels and couplers, attached thereto. Thus, it is preferred to wash the contaminants off and remove the foreign matters before processing them into pellets, preferably after the pulverization of the recycled fishery material. This increases the productivity in producing the pellets, and makes the strands less likely to break when the molten resin mixture is extruded in the resin particles forming step (b) described later and therefore increases the productivity in producing the resin particles.

The removal of the contaminants also enables the expanded beads to have excellent moldability when the expanded beads are produced into an expanded beads molded article by in-mold molding. It is preferred to use a magnet to remove metal parts. Water, hot water, detergent and so on are used for the washing, and the use of a high-pressure washing machine is also preferred.

The degree of contamination of the recycled polyolefin-based resin (II) is represented by an ash content. It is important that the ash content of the recycled resin (II) should be 3% by mass or less, preferably 2% by mass or less, more preferably 1.5% by mass or less. A lower ash content means that the recycled resin (II) has particularly lower levels of contaminants than those having been subjected to removal of foreign matters and washing as described above. Examples of elements related to the ash content in the recycled resin (II) include calcium, sodium and silicon. Specific examples include carbonate and sulfate salts of Ca, Na and Si derived from sea water. In the expanded beads of the present invention, a minute amount of such substances contained therein is considered to serve as a cell nucleus forming agent and contributes to the decrease in the apparent density (increase in the expansion ratio) of the expanded beads during expansion. From the above point of view, the recycled resin (II) preferably has an ash content of 0.05% by mass or more.

The ash content may be measured according to JIS K 6226-2 using, for example, a thermogravimetric analyzer TGA701 manufactured by LECO. An amount W0 (about 5 g) of the recycled resin (II) as a measurement sample is taken and placed in a crucible, and a nitrogen stream is introduced into the heating furnace. Then, (1) the temperature in the heating furnace is increased from room temperature to 105°C at a rate of 10°C/min under a nitrogen atmosphere. Then, (2) the temperature is maintained at 105°C until the weight reaches equilibrium. Then, (3) the temperature is increased from 105°C to 450°C at a rate of 10°C/min. Then, (4) the temperature is maintained at 450°C until the measured weight reaches equilibrium. The weight in the equilibrium state is defined as W1. Then, (5) the stream into the heating furnace is changed from nitrogen to air and the temperature is increased from 450°C to 950°C at a rate of 10°C/min. Then, (6) the temperature is maintained at 950°C for 10 minutes and a weight W2 of the combustion residue is obtained. Then, (7) the temperature is decreased to room temperature. The quotient obtained by dividing the weight W2 of the combustion residue by the weight W0 of the measurement sample placed in the crucible is multiplied by 100 (W2/W0 × 100) to give the ash content [% by mass] of the recycled resin (II).

The ash content of the resin particles described later may be also measured in the same manner. In addition, when the resin particles contain an inorganic pigment such as carbon black as a colorant, its content may be determined by the following method. A weight W3 of the combustion residue is obtained by subtracting the weight W2 measured after the temperature is maintained for 10 minutes in step (6) from the weight W1 measured after the measured weight reaches equilibrium in step (4) (W3 = W1 - W2). Then, the quotient obtained by dividing the weight W3 of the combustion residue by the weight W0 of the measurement sample placed in the crucible is multiplied by 100 (W3/W0 × 100) to give the inorganic pigment content [% by mass] of the resin particles.

Thermoplastic resins such as nylon, polyester, polyethylene and polypropylene are generally used as raw materials to produce fishery nets, fishing lines, ropes, etc. Among them, a polyolefin-based resin, such as polyethylene, polypropylene or a mixture of polyethylene and polypropylene, that has been selectively recovered and pelletized is preferably used as the recycled polyolefin-based resin (II) in the present invention.

Examples of the preferred recycled polyolefin-based resin (II) include polyethylene-based resins, polypropylene-based resins, and mixtures of two or more thereof. Examples of the polyethylene-based resins include polymers of ethylene monomers and copolymers of ethylene with a comonomer having an ethylene component content of more than 50 mol%, such as high density polyethylenes, low density polyethylenes, linear low density polyethylenes, ethylene-vinyl acetate copolymers, and mixtures of two or more thereof. Examples of the polypropylene-based resins include polymers of propylene monomers, propylene-ethylene copolymers, propylene-butene copolymers, propylene-ethylene-butene copolymers, and mixtures of two or more thereof.

Among these polyolefin-based resins, high density polyethylenes, propylene homopolymers, and mixtures of thereof are preferred because these resins may be easily melt-mixed with the propylene-based random copolymer (I). The recycled polyolefin-based resin (II) more preferably comprises a high density polyethylene because of its capability of affording expanded beads having excellent in-mold moldability. As used herein, "high density polyethylene" refers to a polyethylene having a density of more than 940 kg/m³ and less than 970 kg/m³.

It is important that the recycled resin (II) has a melting point of 125 to 170°C. When the melting point is in this range, the recycled resin (II) gives good expanded beads when mixed with the copolymer (I) having a melting point of 120°C or more. In addition, when the recycled resin (II) contains a high density polyethylene, the melting point of the high density polyethylene is preferably 125°C or more, more preferably 130°C or more. The upper limit of the melting point of the high density polyethylene is preferably 145°C, more preferably 140°C. When the high density polyethylene has a melting point in the above range, the obtained expanded beads show excellent in-mold moldability.

For reasons of obtaining expanded beads having improved in-mold moldability, it is preferred that the recycled resin (II) contains a high density polyethylene resin in an amount of 50% by mass or more, more preferably 60% by mass or more, still more preferably 70% by mass or more, much more preferably 80% by mass or more, especially preferably 90% by mass or more.

The recycled resin (II) preferably has a bending elastic modulus of 500 MPa or more, more preferably 600 MPa or more, in which case the rigidity of the recycled resin (II) is maintained and the resulting molded article can have a high ability to recover from shrinkage after molding. In order for the resulting molded article to have excellent flexibility, on the other hand, the recycled resin (II) preferably has a bending elastic modulus of 1400 MPa or less, more preferably 1300 MPa or less.

In the melt-mixing step (a), it is important that the copolymer (I) and the recycled resin (II) are blended in proportions of 5 to 60% by mass and 40 to 95% by mass, respectively, with the proviso that the total of the copolymer (I) and the recycled resin (II) is 100% by mass. Too low a blending proportion of the recycled resin (II) leads to a possibility that the purpose of reusing a recycled fishery material (efficient use of resources and reduction of carbon dioxide) cannot be achieved. On the other hand, too high a blending proportion of the recycled resin (II) leads a decrease in preparation stability, such as a tendency for the strands to break easily when the molten resin mixture is extruded from the extruder in the succeeding resin particles forming step (b), making it difficult to obtain the resin particles stably or making it impossible to obtain expanded beads having a desired density in the expanding step (c).

From the above point of view, the copolymer (I) is preferably blended in a proportion of 50 to 90% by mass, and the recycled resin (II) is preferably blended in a proportion of 10 to 50% by mass. Also, the copolymer (I) is more preferably blended in a proportion of 60 to 85% by mass, and the recycled resin (II) is more preferably blended in a proportion of 15 to 40% by mass. The copolymer (I) is still more preferably blended in a proportion of 70 to 80% by mass, and the recycled resin (II) is still more preferably blended in a proportion of 20 to 30% by mass. In each case, the total of the copolymer (I) and the recycled resin (II) is 100% by mass.

The copolymer (I) preferably has a melt flow rate (hereinafter occasionally referred to as "MFR") of 1 to 10 g/10 min as measured at a temperature of 230°C and a load of 2.16 kg. When MFR is within this range, the resulting expanded beads have improved expansion property and moldability, and a good expanded beads molded article may be obtained. From the above point of view, the copolymer (I) more preferably has an MFR of 2 g/10 min or more, still more preferably 3 g/10 min or more. The copolymer (I) more preferably has an MFR of 8 g/10 min or less, still more preferably 7 g/10 min or less.

In addition, the recycled resin (II) preferably has an MFR that is lower than that of the copolymer (I). When the MFR of the recycled resin (II) is lower than that of the copolymer (I), the resulting expanded beads have improved expansion property and moldability, and a good expanded beads molded article may be obtained. A low MFR of the recycled polyolefin-based resin (II) means that the resin constituting the recycled resin (II) is not excessively deteriorated. To maintain the MFR of the recycled resin (II) at a low level, it is preferred that the recycled fishery material is not exposed to excessive heat or shear force when it is melted by heating and pelletized to obtain the recycled resin (II). The recycled resin (II) preferably has an MFR of 5 g/10 min or less, more preferably 3 g/10 min or less.

As used herein, the melt flow rate is a value measured at a temperature of 230°C and a load of 2.16 kg according to JIS K7210-1 (2014).

The resin particles from which the expanded beads are produced in step (c) of the process of the present invention may contain one or more additional resin components other than the copolymer (I) and the recycled resin (II) as long as the effects of the present invention are not adversely affected. Such optional additional resin components are added to the propylene-based random copolymer (I) and the recycled resin (II) in the melt-mixing step (a). Examples of the additional resin components include styrene-based resins such as polystyrene and styrene-maleic anhydride copolymers, rubbers such as ethylene-propylene-based rubber (having a melting point of less than 120°C), ethylene-1-butene rubber, propylene-1-butene rubber, ethylene-propylene-diene-based rubber, isoprene rubber, neoprene rubber and nitrile rubber, and thermoplastic elastomers such as styrene -butadiene-styrene block copolymers, styrene-isoprene-styrene block copolymers, hydrogenation products of styrene-butadiene-styrene block copolymers and hydrogenation products of styrene-isoprene-styrene block copolymers. These resins, rubbers, or elastomers may be used in combination of two or more. When the additional resin component or components as described above are used, the total content of thereof is preferably 10% by mass or less, more preferably 5% by mass or less, still more preferably 3% by mass or less based on the total mass of the copolymer (I), the recycled resin (II) and the additional resin component or components. In the present specification, the resins that constitute the resin particles (and also the expanded beads) are collectively referred to simply as "base resin". Thus, for example, the base resin of the resin particles produced in step (b) includes the copolymer (I), the recycled resin (II) and an optional additional resin or resins.

In the melt-mixing step (a), optional additives may be added to the propylene-based random copolymer (I) and the recycled resin (II). Examples of the additives include a cell controlling agent, a colorant, a flame retardant, a lubricant, an anti-oxidant, an anti-weathering agent and a dispersion diameter expanding agent.

Example of the cell controlling agent include talc, silica, calcium carbonate, borax, zinc borate, aluminum hydroxide, alum, fatty acid monoamides, fatty acid bisamides, polyethylene wax, methylenebisstearic acid, zinc borate, and polytetrafluoroethylene. The cell controlling agent is preferably added in an amount of 0.001 to 10 parts by mass, more preferably 0.01 to 5 parts by mass, per 100 parts by mass of the total of the copolymer (I) and the recycled resin (II). Although the cell controlling agent may be added as such, it is generally preferred that the cell controlling agent is added in the form of a master batch thereof in view of its dispersibility.

Many of recycled fishery materials such as fishery nets, fishing lines and fishery ropes are colored, for example, in green. In such a case, the expanded beads, that contain the recycled resin (II) obtained by pelletizing the recycled fishery material, and the finally obtained expanded beads molded article will have a color derived from the recycled fishery material.

For the purpose of improving the appearance of the expanded beads containing the recycled resin (II) and of the finally obtained expanded beads molded article, a colorant may be incorporated therein . As the colorant, either a pigment or a dye may be used. Preferred usable examples of the colorant include carbon blacks such as furnace black, channel black, thermal black, acetylene black and Ketjen black, and carbon-based pigments such as black lead and carbon fibers, with carbon blacks being more preferred.

The colorant is preferably added to the expanded beads in an amount of 0.5% by mass or more, more preferably 1% by mass or more, still more preferably 2% by mass or more, from the viewpoint of improving the appearance thereof. The colorant is also preferably added to the expanded beads in an amount of 10% by mass or less, more preferably 7% by mass or less, still more preferably 5% by mass or less, from the viewpoint of maintaining the in-mold moldability of the expanded beads.

When a molten resin mixture is formed in an extruder in the melt-mixing step (a), the additives such as a cell controlling agent and a colorant may be directly fed to and kneaded in the extruder. However, it is preferred to previously prepare a master batch of the additives. The master batch is then fed to the extruder together with the copolymer (I) and the recycled resin (II) and melted and kneaded therein together.

In the resin particles forming step (b), the molten resin mixture obtained in the melt-mixing step (a) is formed or shaped into resin particles. The step (a) and the step (b) are preferably performed successively in one extruder. In other words, in step (a) the copolymer (I), the recycled resin (II) and, if desired, optional additives and additional resin components, are heated, melted and kneaded in an extruder to form a molten resin mixture and, in step (b) the molten mixture is extruded from the extruder and the extrudate is shaped into resin particles. In the step (b), the molten resin mixture is preferably extruded through a die attached to an exit of the extruder in the form of strands. The strands are then cooled by being passed through water, and cut to an appropriate length to obtain resin particles. Alternatively, the strands may be cut before being cooled or simultaneously cooled and cut to obtain particles with appropriate length and weight.

The strands are preferably cut into resin particles each having a weight of 0.5 to 10 mg, more preferably 1 to 5 mg. Resin particles having a weight in this range are preferred because the expanded beads obtained therefrom may be uniformly filled in a mold cavity at the time of in-mold molding.

The resin particles preferably have an ash content of 1 % by mass or less, more preferably 0.5% by mass or less, still more preferably 0.4% by mass or less. The resin particles may sometimes contain inorganic components derived from a cell controlling agent and so on. The amount of the inorganic components contained in the resin particles is so small that such inorganic components do not influence on the measurement of the ash content, however. The ash content in the resin particles may be measured by a method as already described above.

In the expanding step (c), the resin particles obtained in the step (b) are foamed and expanded to prepare expanded beads. In a preferred embodiment of the present invention, the expanded beads may be produced by a method which includes dispersing the resin particles in a dispersing medium in a closed vessel; injecting a physical blowing agent into the closed vessel to impregnate the resin particles with the blowing agent; and then releasing the blowing agent-impregnated resin particles from the closed vessel together with the dispersing medium to an atmosphere having a pressure lower than that in the closed vessel (so-called dispersing medium release foaming method). More specifically, the expanded beads may be obtained as follows. The resin particles are dispersed in a dispersing medium, such as water, contained in a closed vessel such as an autoclave together with a physical blowing agent, etc. The dispersing medium is then heated to a temperature not lower than the softening point of the resin particles to impregnate the resin particles with the blowing agent. With the pressure inside the closed vessel maintained at a pressure not lower than the vapor pressure of the blowing agent, an end portion of the closed vessel that is located beneath the water level is opened to release the expandable resin particles containing the blowing agent together with the dispersing medium such as water from the closed vessel to an atmosphere which is maintained at a pressure lower than that in the closed vessel, generally the atmospheric pressure, to foam and expand the resin particles. Alternatively, the expandable resin particles which contain a physical blowing agent may be taken out of the closed vessel and then heated with a heating medium such as steam to foam and expand the resin particles.

When the resin particles are discharged from a higher pressure zone in which no foaming thereof takes place to a lower pressure zone in which the foaming thereof takes place, the difference in pressure between the higher pressure zone and the lower pressure zone is at least 400 kPa, preferably 500 to 15000 kPa.

Examples of the blowing agent that is usually used in the dispersing medium release foaming method include organic physical blowing agents such as propane, isobutane, normal butane, isopentane, normal pentane, cyclopentane, normal hexane, cyclobutane, cyclohexane, chlorofluoromethane, trifluoromethane, 1,1,1,2-tetrafluoroethane, 1-chloro-1,1-difluoroethane, 1,1-difluoroethane and 1-chloro-1,2,2,2-tetrafluoroethane, and inorganic physical blowing agents such as nitrogen, carbon dioxide, argon and air. Among these, an inorganic physical blowing agent, which does not lead to the destruction of the ozone layer and is inexpensive, is preferred, with carbon dioxide being particularly preferred. The above blowing agents may be used in combination of two or more thereof.

The amount of the blowing agent is determined as appropriate according to the relation between the intended bulk density of the expanded beads and the temperature at which the foaming is carried out. Specifically, the above blowing agents other than nitrogen and air are usually used in an amount of 2 to 50 parts by weight per 100 parts by weight of the resin particles. In the case of nitrogen and air, the blowing agent is used in such an amount that the pressure within the closed vessel reaches 1 to 7 MPa(G). Here, MPa(G) means that the value is a gauge pressure.

As the dispersing medium for dispersing the resin particles in the closed vessel, an aqueous dispersing medium is preferred. However, other dispersing media, such as ethylene glycol, glycerin, methanol and ethanol, may be used as long as the resin particles are not dissolved therein. Such other dispersing media may be used in combination with water, if desired. Usually, water is used as the dispersing medium.

A melt-adhesion preventing agent may be incorporated into the dispersing medium for the purpose of preventing the resin particles dispersed therein from melt-adhering to each other during heating of the dispersion in the closed vessel. Any organic and inorganic material may be used as the melt-adhesion preventing agent, as long as it is insoluble in the dispersing medium and are not fused when heated. An inorganic material is generally preferably used.

Preferred examples of the inorganic melt-adhesion preventing agent include powders of kaolin, talc, mica, aluminum oxide, titanium oxide and aluminum hydroxide. The melt-adhesion preventing agent preferably has an average particle size of 0.001 to 100 µm, more preferably 0.001 to 30 µm, and is preferably added in an amount of 0.01 to 10 parts by weight per 100 parts by weight of the resin particles.

A dispersing aid such as an anionic surfactant, e.g., sodium dodecylbenzenesulfonate and sodium oleate, or aluminum sulfate may also be suitably used. The dispersing aid is preferably added in an amount of 0.001 to 5 parts by weight per 100 parts by weight of the resin particles.

When expanded beads with a low bulk density are to be produced, it is preferred to conduct so-called two-step expansion in which expanded beads are first produced by, for example, a dispersing medium release foaming method as described above and the obtained expanded beads are further expanded. In the two-step expansion, the expanded beads obtained in the first step are charged in a closed pressure vessel. Then, in the second step, the inner pressure of the expanded beads is increased to 0.01 to 0.6 MPa(G) using a gas such as air. The resulting expanded beads are then taken out of the vessel and heated with a heating medium such as steam. In this way, expanded beads having a low bulk density may be easily obtained.

In the expanding step (c), it is preferred to obtain expanded beads having a bulk density of 10 kg/m³ or more by expanding the resin particles. In order for the finally obtained expanded beads molded article to have excellent mechanical strength, it is preferred that the bulk density satisfies the above range. From the above point of view, the expanded beads more preferably have a bulk density of 15 kg/m³ or more, still more preferably 20 kg/m³ or more, especially preferably 25 kg/m³ or more. From the viewpoint of improving shock-absorbing property and light weight property of the expanded beads molded article, it is preferred to obtain expanded beads having a bulk density of 100 kg/m³ or less, more preferably 70 kg/m³ or less, still more preferably 50 kg/m³ or less, especially preferably 40 kg/m³ or less.

As used herein, the bulk density is measured as follows. An empty 1L measuring cylinder is provided. The expanded beads are filled in the measuring cylinder up to the 1L mark line thereof. The weight (g) of the expanded beads per liter is measured. The bulk density (kg/m³) of the expanded beads is then obtained by dividing the weight of the expanded beads by the volume thereof, followed by unit conversion to [kg/m³]

In the expanding step (c), the expanded beads produced preferably have an average cell diameter of 30 µm or more, more preferably 40 µm or more, still more preferably 45 µm or more, especially preferably 50 µm or more. On the other hand, the expanded beads preferably have an average cell diameter of 300 µm or less, more preferably 200 µm or less, still more preferably 150 µm or less, especially preferably 120 µm or less. When the average cell diameter is within the above range, the expanded beads have excellent in-mold moldablity and the resulting expanded beads molded article will be excellent in dimension recovering ability as well as in mechanical properties such as compressive strength.

As used herein, the average cell diameter of the expanded beads is determined as follows based on enlarged microscopic images of cross-sections of expanded beads divided into nearly equal halves. First, on the enlarged image of the cross section of each expanded bead, four line segment each passing nearly through the center of the cross section and extending from one surface of the expanded bead to the other, opposite surface thereof are drawn such that eight angularly equally spaced straight lines extend radially from nearly the center of the cross section toward the external surface of the expanded bead. Then, a total number N of the cells that intersect the above four line segments is counted. Also measured is a total length L (µm) of the four line segments. The value (L/N) obtained by dividing the total length L by the total number N is defined as the average cell diameter of the expanded bead. Similar procedures are repeated for ten or more expanded beads in total. The arithmetic mean of the average cell diameters of the ten or more expanded beads represents the average cell diameter (µm) of the expanded beads.

The bulk density of the resulting expanded beads is controlled by adjustment of the amount of the blowing agent, the foaming temperature and the above described difference in pressure at the time of the foaming. The bulk density of the resulting expanded beads is smaller in general with an increase of the amount of the blowing agent, the forming temperature and the pressure difference as long as these factors are within appropriate ranges. The average cell diameter of the expanded beads may be controlled by adjustment of the kind and amount of the blowing agent, the foaming temperature and the amount of the cell controlling agent.

In the present invention, the expanded beads obtained in the expanding step (c) preferably show, when measured by heat flux differential scanning calorimetry, a melting peak intrinsic to the base resin constituting the expanded beads (hereinafter occasionally referred to simply as "intrinsic melting peak") and another melting peak that is derived from secondary crystallization of the resin formed as a result of their specific thermal history during the expansion step (c) and is located on a higher temperature side of the above intrinsic melting peak (hereinafter occasionally referred to simply as "high temperature peak").

Thus, in a preferred embodiment of the present invention, the expansion step (c) comprises: dispersing the resin particles in a dispersing medium in a closed vessel; injecting a physical blowing agent into the closed vessel to impregnate the resin particles with the blowing agent; maintaining the dispersing medium in which the resin particles are dispersed at a temperature within the range of from a temperature lower by 30°C than the melting point of a base resin constituting the resin particles to a temperature less than the melting end temperature of the base resin for a period of between 1 to 60 minutes; and then releasing the blowing agent-impregnated resin particles from the closed vessel together with the dispersing medium to an atmosphere having a pressure lower than that in the closed vessel, so that the expanded beads show at least two melting peaks on a first time DSC curve obtained when a measurement sample from the expanded beads is heated from 30°C to a first temperature higher by 30°C than a melting peak end temperature at a heating rate of 10°C/min according to heat flux differential scanning calorimetry referenced in JIS K7121(1987), the at least two melting peaks including a melting peak intrinsic to the base resin constituting the expanded beads and a high temperature peak that has a peak top temperature higher than a peak top temperature of the intrinsic melting peak. Further, the expanded beads show the intrinsic melting peak but do not show a high temperature peak on a second time DSC curve obtained when the measurement sample, heated to the first temperature in the first time DSC curve measurement, is maintained at the first temperature for 10 minutes, then cooled to 30°C at a cooling rate of 10°C/min and again heated from 30°C to a second temperature higher by 30°C than a melting peak end temperature at a heating rate of 10°C/min according to heat flux differential scanning calorimetry referenced in JIS K7122(1987). The expanded bead sample subjected to the DSC measurement is generally 1 to 3 mg. When one expanded bead is heavier than 3 mg, the expanded bead is divided into nearly equal halves and one of them is used as a measurement sample.

The expanded beads which show the high temperature peak in the first time DSC curve, have excellent in-mold moldability. Also, the expanded beads molded article obtained from such expanded beads is excellent in mechanical properties such as compressive strength and tensile strength.

The heat of fusion of the high temperature peak (high temperature peak calorific value) is preferably 10 J/g or more, more preferably 15 J/g or more, still more preferably 20 J/g or more. On the other hand, the heat of fusion of the high temperature peak is preferably 35 J/g or less, more preferably 30 J/g or less, still more preferably 25 J/g or less. When the heat of fusion of the high temperature peak is within the above range, the expanded beads have more excellent in-mold moldability. Also, the resulting expanded beads molded article will have further improved mechanical strength.

The heat of fusion of the high temperature peak is measured by a measuring method according to JIS K7122(1987) as follows. Expanded beads (1 to 3 mg) are sampled and heated in a heat flux differential scanning calorimeter from 23°C to a first temperature that is higher by 30°C than a melting peak end temperature at a heating rate of 10°C/min to obtain a first time DSC curve. FIG. 1 shows an example of the first time DSC curve obtained by performing heat flux differential scanning calorimetry on the expanded beads obtained by the process of the present invention. In FIG. 1, "a" indicates an intrinsic melting peak that appears on a lower temperature side, "b" indicates a high temperature peak, and T_{E} is a melting end temperature at which the foot of an endothermic peak "b" on the higher temperature side returned to the position of the base line.

The heat of fusion of the high temperature peak in the first time DSC curve is determined as follows. As shown in FIG. 1, a straight line connecting a point α on the DSC curve at 80°C with a point β on the DSC curve at a melting end temperature T_{E} of the expanded beads is drawn. A straight line which is parallel with the ordinate of the graph is drawn from a point γ at the bottom of the valley between the intrinsic melting peak "a" and the high temperature peak "b". This straight line crosses the straight line connecting the point α and the point β at a point δ. The heat of fusion of the high temperature peak is the heat of fusion corresponding to the area surrounded by the straight line connecting the point δ and the point γ, the DSC curve from the point γ to the point β and the straight line connecting the point β and the point δ. The high temperature peak "b" appears in the first time DSC curve obtained as described above, but does not appear in a second time DSC curve that is obtained when the measurement sample after the measurement of the first time DSC curve is maintained at the first temperature for 10 minutes, then cooled to 30°C at a cooling rate of 10°C/min and again heated to a second temperature higher by 30°C than a melting peak end temperature at a heating rate of 10°C/min. In the second DSC curve, only the intrinsic melting peak "a" intrinsic to the base resin constituting the expanded beads appears. For example, when the difference in melting point between the propylene-based random copolymer (I) and the recycled polyolefin-based resin (II) is large, three or more endothermic peaks appear in the first time DSC curve. In this case, too, no high temperature peak appears in the second time DSC curve. Accordingly, it is possible to determine which peak is the high temperature peak in the first time DSC curve by comparing the first time DSC curve with the second time DSC curve.

In the foregoing description, the resin particles produced in step (b) have a single-layer structure and the expanded beads obtained in step (c) also have a single-layer structure. In another preferred embodiment, the process of the present invention is concerned with the production of multilayer expanded beads each having a core layer in an expanded state (hereinafter occasionally referred to simply as "expanded core layer") and a polyolefin-based resin cover layer (hereinafter occasionally referred to simply as "cover layer") provided on the surface of the expanded core layer.

The expanded core layers of the multilayer expanded beads have the same constitution as that of the above-described expanded beads having a single-layer structure. Thus, the multilayer expanded beads are excellent in expansion property and in-mold moldability. Further, because of the presence of the polyolefin-based resin cover layer, the multilayer expanded beads have improved mutual fusion-bonding property and, therefore, the finally obtained expanded beads molded article will have improved physical properties such as tensile strength and compressive strength. The multilayer expanded beads and process for the production thereof will be described in detail below.

The cover layer may or may not be in an expanded state. However, the cover layer is preferably a resin layer that is in a substantially non-expanded state in order for the resulting expanded beads molded article to have excellent mechanical strength. The "substantially non-expanded state" herein refers not only to the case where cells are not present at all (including the case where cells once formed when the resin particles were expanded have been completely melt-fractured) but also to the case where there are a small number of very micro cells in such a degree that the mechanical strength of the resulting expanded beads molded article will not be adversely affected.

In the multilayer expanded beads, the expanded core layer may be completely covered with the cover layer. Alternately, the expanded core layer may be partially exposed. Examples of the structure in which the expanded core layer is partially exposed include a structure in which only the side periphery of a cylindrical expanded core layer is covered with the cover layer and the expanded core layer is exposed at the top and bottom of the cylinder.

Examples of the polyolefin-based resin (III) for constituting the cover layer include polypropylene-based resins, polyethylene-based resins, polybutene-based resins, and mixtures thereof.

A polypropylene-based resin refers to a resin containing 50% by mass or more of a propylene component unit. Examples of the polypropylene-based resin include propylene homopolymers and copolymers of propylene with another olefin copolymerizable with propylene. Examples of the olefin copolymerizable with propylene include ethylene and α-olefins having four or more carbon atoms, such as 1-butene. The copolymers may be random copolymers or block copolymers and may be binary copolymers or ternary copolymers. These polypropylene-based resin may be used singly or as a mixture of two or more thereof. Examples of the above copolymers include propylene-ethylene random copolymers, propylene-ethylene block copolymers, propylene-ethylene-butene random copolymers, and mixtures of two or more thereof.

A polyethylene-based resin refers to a resin containing 50% by mass or more, preferably 70% by mass or more, more preferably 80% by mass or more, still more preferably 90% by mass or more, of an ethylene component unit. An ethylene homopolymer, or a copolymer of ethylene with an α-olefin having 4 to 6 carbon atoms is preferably used. Examples of the polyethylene-based resin include high density polyethylenes, medium density polyethylenes, low density polyethylenes, linear low density polyethylenes, very low density polyethylenes, ethylene-vinyl acetate copolymers, ethylene-acrylic acid copolymers, ethylene-acrylic acid alkyl ester copolymers, ethylene-methacrylic acid copolymers, ethylene-methacrylic acid alkyl ester copolymers, and mixtures of two or more thereof.

When the polyolefin-based resin (III) constituting the cover layer is a polypropylene-based resin, the polypropylene-based resin preferably has the same resin composition as the copolymer (I) constituting the expanded core layer. When the polyolefin-based resin (III) constituting the cover layer has the same resin composition as the copolymer (I) constituting the expanded bead core layer, the adhesion between the expanded bead core layer and the cover layer may be improved.

The polyolefin-based resin (III) constituting the cover layer may contain the recycled resin (II). The amount of the recycled resin (II) that is blended in the polyolefin-based resin constituting the cover layer is preferably smaller than the amount of the recycled resin (II) in the resin constituting the expanded bead core layer. From the viewpoint of improving the preparation stability of the expanded beads and the thermal fusion bonding between the expanded beads, however, the polyolefin-based resin (III) is preferably substantially free of the recycled resin (II).

When the cover layer is constituted of a polyolefin-based resin (III) having a melting point lower than that of the copolymer (I) of the expanded core layer, the molding vapor pressure during in-mold molding may be lowered. In other words, when the multilayer expanded beads having a cover layer with a low melting point are subjected to in-mold molding at a molding temperature at which the expanded core layer may undergo secondary expansion, the cover layer is softened earlier than the expanded bead core layer so that fusion bonding between the multilayer expanded beads is facilitated.

The polyolefin-based resin (III) constituting the cover layer preferably has a melting point that is lower than that of the copolymer (I) constituting the expanded bead core layer by 0 to 30°C, more preferably by 5 to 25°C, still more preferably by 10 to 20°C.

The cover layer may contain additives such as a colorant, a flame retardant, a lubricant, an anti-oxidant and an anti-weathering agent, and it is particularly preferred to add carbon black as a colorant. Incorporation of these additives is achieved by, for example, incorporating the additives into the polyolefin-based resin for forming the cover layer when a molten resin for forming the cover layer as described later is formed.

The mass ratio between the expanded bead core layer and the cover layer is preferably 99.5:0.5 to 65:35, more preferably 99:1 to 70:30, still more preferably 97:3 to 75:25, especially preferably 97:3 to 80:20. The mass ratio in the above range is preferred because the fusion bonding improving effect is easily obtained.

The multilayer expanded beads may be produced when step (b) is carried out in such a way that the obtained resin particles are multilayer resin particles each comprising a core layer containing the propylene-based random copolymer (I) and the recycled polyolefin-based resin (II), and a cover layer containing a polyolefin-based resin (III) and covering the core layer, and when in step (c) the core layers of the multilayer resin particles are expanded. Namely, the multilayer expanded beads may be obtained by a method which includes forming a molten resin mixture in the same manner as described above in the melt-mixing step (a); coextruding the molten resin mixture obtained in step (a) and the polyolefin-based resin (III) in a molten state so as to produce multilayer resin extrudates in which the molten resin mixture forms a core layer and the molten polyolefin-based resin (III) forms a cover layer that covers the core layer and cutting the extrudates into multilayer resin particles in the above resin particles forming step (b); and expanding the multilayer resin particles by the method as described above in the expanding step (c).

Thus, the multilayer resin particles have a core layer that is constituted of the copolymer (I) and the recycled resin (II) and a cover layer that covers the core layer and is constituted of the polyolefin-based resin (III).

More specifically, the multilayer resin particles may be produced as follows. A device having two first and second extruders connected to a coextrusion die, is used. The first extruder is used for forming the core layer, while the second extruder is used for forming the cover layer. The propylene-based random copolymer (I), the recycled polyolefin-based resin (II) and, if desired optional additives such as a cell controlling agent and a colorant, are fed to the first extruder and melted and kneaded to obtain a first molten resin mixture for forming the core layer. On the other hand, the polyolefin-based resin (III) and, if desired optional additives such as a colorant, are fed to the second extruder and melted and kneaded to obtain a second molten resin mixture for forming the cover layer. The first molten resin mixture is fed to the coextrusion die to form a linear flow. At the same time, the second molten resin mixture is fed into the coextrusion die such that the linear flow of the first molten resin is surrounded by and laminated with the second molten resin, thereby forming a composite molten resin stream that has a core-sheath structure. The composite molten resin stream is then extruded, in the form of one or more strands, through small hole(s) of a mouthpiece or die attached to an exit of the extruder. Multilayer resin particles may be obtained by, for example, cutting the strand(s), after having been passed through water, into suitable lengths or by simultaneously cutting and cooling the strands as soon as the composite molten resin has been extruded through the die into water.

The method for producing multilayer resin particles using a coextrusion die as described above is disclosed in detail in, for example, Japanese Examined Patent Publications Nos. JP-S41-16125, JP-S43-23858 and JP-S44-29522 and Japanese Unexamined Patent Publication No. JP-A-S60-185816.

When the cover layer constituting the multilayer resin particles is produced, additives such as a colorant may be fed directly to the second extruder for forming the cover layer and kneaded together with the polyolefin-based resin (III) for forming the cover layer. However, it is preferred to prepare a master batch of additives in advance, and the master batch and the polyolefin-based resin (III) are fed to the second extruder for forming the cover layer and kneaded therein.

In order to ensure uniform filling of the multilayer expanded beads in a mold cavity at the time of in-mold molding, the strands are preferably cut such that the multilayer resin particles each have a weight of 0.02 to 20 mg, more preferably 0.1 to 6 mg.

Next, an expanded beads molded article produced by in-mold molding of the expanded beads obtained according to the present invention is described. The following description applies to both single-layer expanded beads and multilayer expanded beads.

An expanded beads molded article (hereinafter occasionally referred to simply as molded article) may be produced by in-mold molding of the expanded beads obtained according to the present invention. The in-mold molding method is a conventionally known method and includes filling the expanded beads in a mold cavity and heating the same with a heating medium such as steam to obtain an expanded beads molded article. Specifically, after the expanded beads have been charged or filled in a mold cavity, steam is introduced into the mold cavity to heat and expand the expanded beads. By this, the expanded beads are fusion-bonded to each other, thereby obtaining a molded article having a shape conforming to the shape of the mold cavity. If desired, the expanded beads may be previously subjected to a pressurizing treatment to increase the inside pressure of the expanded beads to 0.01 to 0.2 MPa(G) in the same manner as that of the two-step expansion as described above.

After the molding of the expanded beads by fusion-bonding thereof has been completed, the molded article obtained may be cooled in the mold cavity by a water-cooling method. The cooling may be also carried out by a vacuum method in which heat of vaporization of steam is utilized.

The expanded beads molded article obtained according to the method of the present invention contains a polyolefin-based resin obtained from recycled fishery materials such as fishery nets, fishing lines and ropes, and may therefore effectively reuse such recycled fishery materials.

### EXAMPLES

The present invention will be described below in further detail by way of examples. The present invention is, however, not to be restricted to the examples in any way.

Table 1-1 shows the kinds and physical properties of propylene-based random copolymers (I) and Table 1-2 shows the kinds and physical properties of the recycled polyolefin-based resins (II), which were used as raw material resins in Examples and Comparative Examples.

**Table 1-1**

| Abbreviation | Kind of Resin | Melting Point [°C] | MFR [g/10min] (230°C) | Bending Elastic Modulus MPa | Heat of Fusion [J/g] |
|---|---|---|---|---|---|
| Copolymer Resin 1 | Copolymer (I) | 151 | 6 | 950 | 83 |
| Copolymer Resin 2 | Copolymer (I) | 135 | 5 | 670 | 65 |

**Table 1-2**

| Abbreviation | Kind of Resin | Maker | Grade | Melting Point [°C] | MFR [g/10min] (230°C) | Bending Elastic Modulus [MPa] | Heat of Fusion [J/g] |
|---|---|---|---|---|---|---|---|
| Recycled Resin 1 | Recycled Polyolefin Resin (II) | Plastix | OCEANIX rPPC 210-001 | 168 | 2 | 1,300 | 87 |
| Recycled Resin 2 | Recycled Polyolefin Resin (II) | Plastix | OCEANIX rHDPE 110-001 | 136 | 1 | 600 | 193 |
| Recycled Resin 3 | Recycled Polyolefin Resin (II) | Plastix | trial product | 167 | 7 | 1,300 | 86 |

In Table 1-2, the recycled resin 1 and the recycled resin 3 are each a resin mixture of a propylene homopolymer and a high density polyethylene with the propylene homopolymer being a primary component.

The melt flow rate (MFR) of each raw material resin was measured at a temperature of 230°C and a load of 2.16kg according to JIS K7210-1(2014).

The bending elastic modulus of each raw material resin in Tables 1-1 and 1-2 was measured by the following method. The bending elastic modulus was measured according to JIS K7171-2(2016). A press sheet with a thickness of 4 mm was prepared from each raw material resin in Tables 1-1 and 1-2 by the following method. Specifically, a 4 mm-thick mold was placed on a heat press heated at 200°C, and the raw material resin was placed and melted in the mold cavity. Thereafter, a pressure of 15 MPa was applied to the molten material for 5 minutes, and then the mold was moved onto a heat press at 200°C. Then, a pressure of 15 MPa was applied until the temperature reached normal temperature, thereby obtaining a sheet. A test piece with a length of 80 mm and a width of 10 mm was cut out of the obtained sheet and conditioned in normal conditions for 24 hours. A test was conducted at a test speed of 2 mm/min using an autograph AGS-X universal tester manufactured by Shimadzu Corporation to obtain a bending elastic modulus.

The melting point of each raw material resin in Tables 1-1 and 1-2 was measured by heat flux differential scanning calorimetry according to JIS K7121(1987). At a nitrogen inflow rate of 30 mL/min, the resin was melted by heating it from 30°C to a first temperature higher by 30°C than a melting peak end temperature at a heating rate of 10°C/min (first heating). After having been maintained at the first temperature for 10 minutes and then cooled to 30°C at a cooling rate of 10°C/min, the resin was again melted by heating it to a second temperature higher by 30°C than a melting peak end temperature at a heating rate of 10°C/min to obtain a DSC curve. The peak top temperature of the melting peak on the DSC curve was defined as the melting point of the resin. When there are two or more melting peaks, the peak top temperature of the endothermic curve peak with the highest peak intensity was defined as the melting point of the resin. As a measuring device, a high-sensitivity differential scanning calorimeter "EXSTAR DSC7020" (manufactured by SII NanoTechnology Inc.) was used. The heat of fusion of the raw material resin in Tables 1-1 and 1-2 was obtained as the total heat of fusion of the melting peak on the second time DSC curve obtained in the measurement of the melting point of the raw material resin according to JIS K7122(1987).

As a cell controlling agent, "Zinc Borate 2335" manufactured by Tomita Pharmaceutical Co., Ltd. was used.

### Examples 1 to 7 and Comparative Examples 1 to 3

### Preparation of resin particles:

Use was made of an extruder with a strand forming die attached to an exit thereof for forming resin particles. A propylene-based random copolymer (I) of the kind and amount shown in Tables 2-1 and 2-2, a recycled polyolefin-based resin (II) of the kind and amount shown in Tables 2-1 and 2-2, and additives of the kinds and amounts shown in Tables 2-1 and 2-2 were fed to the extruder for forming resin particles, and heated, melted and kneaded therein at a set temperature of 200 to 220°C to obtain a molten resin mixture. The molten resin mixture was then fed to the die and extruded through the small holes of the die as a multiplicity of strands. The extruded strands were cooled with water and cut with a pelletizer into cylindrical resin particles each having a weight of 1.2 mg and an aspect ratio (L/D) of 2.9. The weight and LID of the resin particles are arithmetic mean values obtained from 100 resin particles randomly extracted from the resin particles.

**Table 2-1**

| Example | | | 1 | 2 | 3 | 4 | 5 |
|---|---|---|---|---|---|---|---|
| Molten Resin Mixture | Copolymer (I) | Resin | Copolymer Resin 1 | Copolymer Resin 1 | Copolymer Resin 1 | Copolymer Resin 1 | Copolymer Resin 1 |
| | | Proportion [% by mass] | 75 | 75 | 50 | 85 | 75 |
| | | Heat of Fusion [J/g] | 83 | 83 | 83 | 83 | 83 |
| | | MFR [g/10min] | 6 | 6 | 6 | 6 | 6 |
| | Recycled Resin (II) | Resin | Recycled Resin 1 | Recycled Resin 1 | Recycled Resin 1 | Recycled Resin 2 | Recycled Resin 2 |
| | | Proportion [% by mass] | 25 | 25 | 50 | 15 | 25 |
| | | Heat of Fusion [J/g] | 87 | 87 | 87 | 193 | 193 |
| | | MFR [g/10min] | 2 | 2 | 2 | 1 | 1 |
| | | Ash Content [% by mass] | 1.16 | 1.09 | 1.10 | 0.76 | 1.06 |
| | Difference in MFR [g/10min] | | 4 | 4 | 4 | 5 | 5 |
| | Additives | Carbon Black [% by mass] | 0 | 2.8 | 0 | 0 | 0 |
| | | Cell Controlling Agent [ppm by mass} | 640 | 940 | 640 | 640 | 640 |
| Production Stability of Resin Particles | | | A | A | A | A | A |
| Ash Content of Resin Particles [% by mass] | | | 0.35 | 0.37 | 0.62 | 0.18 | 0.33 |

**Table 2-2**

| Example | | | 6 | 7 | | | |
|---|---|---|---|---|---|---|---|
| Comparative Example | | | | | 1 | 2 | 3 |
| Molten Resin Mixture | Copolymer (I) | Resin | Copolymer Resin 1 | Copolymer Resin 1 | Copolymer Resin 1 | Copolymer Resin 1 | Copolymer Resin 1 |
| | | Proportion [% by mass] | 75 | 85 | 25 | 25 | 75 |
| | | Heat of Fusion [J/g] | 83 | 83 | 83 | 83 | 83 |
| | | MFR [g/10min] | 6 | 6 | 6 | 6 | 6 |
| | Recycled Resin (II) | Resin | Recycled Resin 3 | Recycled Resin 1 | Recycled Resin 1 | Recycled Resin 1 | Recycled Resin 1 |
| | | Proportion [% by mass] | 25 | 15 | 75 | 75 | 25 |
| | | Heat of Fusion [J/g] | 86 | 87 | 87 | 87 | 87 |
| | | MFR [g/10min] | 7 | 2 | 2 | 2 | 2 |
| | | Ash Content [% by mass] | 0.80 | 0.33 | 0.93 | 0.98 | 4.92 |
| | Difference in MFR [g/10min] | | -1 | 4 | 4 | 4 | 4 |
| | Additives | Carbon Black [% by mass] | 0 | 0 | 2.8 | 0 | 0 |
| | | Cell Controlling Agent [ppm by mass} | 640 | 640 | 910 | 640 | 640 |
| Production Stability of Resin Particles | | | A | A | B | B | B |
| Ash Content of Resin Particles [% by mass] | | | 0.26 | 0.11 | 0.79 | 0.8 | 1.29 |

### Preparation of expanded beads:

20 kg of the thus obtained resin particles were charged in a 100 L autoclave together with 60 L of water as a dispersing medium, to which 15 g of kaolin as a dispersing agent, 12 g of sodium alkylbenzenesulfonate as a dispersing aid, and 3 g of aluminum sulfate were added. Carbon dioxide as a blowing agent was then injected under pressure into the autoclave such that the inside pressure of the autoclave was the foaming pressure shown in Table 3. The contents were heated with stirring until the foaming temperature shown in Table 3 was reached and maintained at the same temperature for 15 minutes to adjust the heat of fusion of the high temperature peak. Thereafter, the contents of the autoclave were released to atmospheric pressure together with the water to obtain expanded beads.

**Table 3**

| Example | | 1 | 2 | 3 | 4 | 5 | 6 | 7 | | | |
|---|---|---|---|---|---|---|---|---|---|---|---|
| Comparative Example | | | | | | | | | 1 | 2 | 3 |
| Expansion Conditions | Foaming Temperature [°C] | 158.0 | 158.8 | 159.5 | 155.0 | 158.0 | 158.5 | 155.0 | 158.0 | 158.0 | 158.3 |
| | Foaming Pressure [MPa] | 3.3 | 3.3 | 3.0 | 3.1 | 3.3 | 3.1 | 3.1 | 3.3 | 3.3 | 3.0 |
| Properties of Expanded Beads | Bulk Density [kg/m³] | 36 | 36 | 36 | 36.5 | 36.5 | 36 | 36.5 | - | - | 36 |
| | Heat of Fusion of High Temperature Peak [J/g] | 22.7 | 22.5 | 22.0 | 21.5 | 21.7 | 22.0 | 21.5 | - | - | 21.5 |
| | Average Cell Diameter [µm] | 73 | 52 | 45 | 107 | 55 | 70 | 98 | - | - | 28 |

### Production of expanded beads molded article:

The expanded beads obtained as above were left to stand and aged in a net layer for 12 hours before being subjected to molding. The molding was conducted as follows. The expanded beads were filled in a pressurized filling hopper and pressurized with compressed air. Then, after a flat-plate shaped mold with a size of 400 mm long × 300 mm wide × 80 mm thick was pressurized to a pressure lower by 0.05 MPa(G) than that in the filling hopper, the partition in the pipe between the filling hopper and the mold was opened to fill the cavity of the flat-plate shaped mold with the expanded beads together with the compressed air. Then, in-mold molding by steam heating was performed to obtain a plate-shaped expanded beads molded article. The pressure in the filling hopper was determined by conducting molding several times at different pressures to find a pressure at which a molded article with a desired density was obtainable. The heating method was as follows. Steam was fed 2 seconds for preheating with drain valves of the both molds opened (purging step). Then, one-way flow heating and full heating steps were carried out. In the one-way flow heating step, steam was fed to carry out one-direction flow heating at a pressure shown in Table 4 and Table 7 and, subsequently, reversed one-direction flow heating was carried out at the same pressure. The full heating step was then carried out at a steam pressure for molding (molding pressure) shown in Table 4 and Table 7. The molding pressure was a pressure at which the molded article showed a fusion-bonding rate of at least 80% without significant shrinkage. After completion of the heating, the pressure was released and the molded product was cooled with water for 20 seconds. The molded product was then cooled until its surface pressure due to the expansion force thereof reached 0.05 MPa(G). Then, the mold was opened and the molded article was taken out of the mold cavity and aged in an oven at 80°C for 12 hours, thereby obtaining an expanded beads molded article. The physical properties of the obtained molded article are shown in Table 4.

**Table 4**

| Example | | 1 | 2 | 3 | 4 | 5 | 6 | 7 | | | |
|---|---|---|---|---|---|---|---|---|---|---|---|
| Comparative Example | | | | | | | | | 1 | 2 | 3 |
| Molding Conditions | Steam Pressure in One-Way Heating Step [MPa] | 2.6 | 2.6 | 2.8 | 2.6 | 3.0 | 2.4 | 3.0 | - | - | 3.0 |
| | Steam Pressure in Full Heating Step [MPa] | 3.6 | 3.6 | 3.8 | 3.6 | 3.6 | 3.4 | 3.6 | - | - | 3.6 |
| Moldability | Evaluation | B | B | C | A | A | C | B | - | - | D |
| Physical Properties of Molded Article | Apparent Density [kg/m³] | 54 | 53 | 51 | 55 | 55 | 51 | 57 | - | - | 51 |
| | Tensile Strength [kPa] | 705 | 830 | 640 | 860 | 855 | 675 | 730 | - | - | 506 |
| | Compressive Stress at 50% Strain [kPa] | 390 | 380 | 345 | 420 | 400 | 345 | 440 | - | - | 327 |

### Examples 8 to 11

### Preparation of multilayer resin particles

Use was made of a device having first and second extruders connected to a strand forming die for forming multilayer strands each having a core layer and a cover layer provided over a side peripheral surface of the core layer. A propylene-based random copolymer (I) of the kind and amount shown in Table 5, a recycled polyolefin-based resin (II) of the kind and amount shown in Table 5, and additives of the kinds and amounts shown in Table 5 were fed to the first extruder for forming the core layer, and, at the same time, the resin for forming the cover layer shown in Table 5 (the total of the resin for forming the core layer and the resin for forming the cover layer was 100% by mass) and the additive of the kind and amount shown in Table 5 were fed to the second extruder for forming the cover layer. The contents in the first and second extruders were heated, melted and kneaded therein at a set temperature of 200 to 220°C. The resulting molten resin mixtures were fed to the die, joined in the die and coextruded through the small holes of a mouthpiece attached at a tip of the die as multilayer strands. The coextruded strands were cooled with water and cut with a pelletizer into cylindrical multilayer resin particles each having a weight of 1.2 mg and an LID of 2.9 and having a dual layer (core-shell) structure. The weight and LID of the multilayer resin particles are arithmetic mean values obtained from 100 multilayer resin particles randomly extracted from the multilayer resin particles.

### Preparation of multilayer expanded beads:

Multilayer expanded beads were prepared using the multilayer resin particles in the same manner as in the preparation of single-layer expanded beads as described above. The foaming temperature and foaming pressure are shown in Table 6.

**Table 5**

| Example | | | 8 | 9 | 10 | 11 |
|---|---|---|---|---|---|---|
| Core Layer | Propylene-Based Random Copolymer (I) | Resin | Copolymer Resin 1 | Copolymer Resin 1 | Copolymer Resin 1 | Copolymer Resin 1 |
| | | Proportion [% by mass] | 85 | 75 | 85 | 75 |
| | | Heat of Fusion [J/g] | 83 | 83 | 83 | 83 |
| | | MFR [g/10min] | 6 | 6 | 6 | 6 |
| | Recycled Polyolefin-Based Resin (II) | Resin | Recycled Resin 1 | Recycled Resin 1 | Recycled Resin 2 | Recycled Resin 2 |
| | | Proportion [% by mass] | 15 | 25 | 15 | 15 |
| | | Heat of Fusion [J/g] | 87 | 87 | 193 | 193 |
| | | MFR [g/10min] | 2 | 2 | 1 | 1 |
| | | Ash Content [% by mass) | 0.63 | 1.24 | 1.00 | 0.88 |
| | Difference in MFR [g/10min] | | 4 | 4 | 5 | 5 |
| | Additive | Carbon Black [% by mass] | 2.8 | 2.8 | 0 | 0 |
| | | Cell Controlling Agent [ppm by mass] | 910 | 910 | 910 | 620 |
| Cover Layer | Polyolefin-Based Resin (III) | Resin | Copolymer Resin 1 | Copolymer Resin 1 | Copolymer Resin 1 | Copolymer Resin 2 |
| | | Proportion [% by mass] | 5 | 5 | 5 | 5 |
| | | Melting Point [°C] | 144 | 144 | 144 | 134 |
| | Additive | Carbon Black [% by mass] | 2.80 | 2.80 | 0.00 | 0.00 |
| Resin Particles Preparation Stability | | | A | A | A | A |
| Ash Content of Resin Particles [% by mass] | | | 0.18 | 0.38 | 0.23 | 0.18 |

**[Table 6]**

| Example | | 8 | 9 | 10 | 11 |
|---|---|---|---|---|---|
| Expansion Conditions | Foaming Temperature [°C] | 157.5 | 157.8 | 154.8 | 155.0 |
| | Foaming Pressure [MPa] | 3.4 | 3.3 | 3.1 | 3.1 |
| Properties of Expanded Beads | Bulk Density [kg/m³] | 35.5 | 35 | 36 | 36.5 |
| | Heat of Fusion of High Temperature Peak [J/g] | 21.5 | 22 | 21.5 | 21.5 |
| | Average Cell Diameter [µm] | 74 | 45 | 75 | 139 |

### Production of expanded beads molded article:

An expanded beads molded article was produced by in-mold molding using the multilayer expanded beads in the same manner as in the production of an expanded beads molded article using the single-layer expanded beads described above. The results of evaluation of moldability and the physical properties of the obtained expanded beads molded articles are shown in Table 7.

**[Table 7]**

| Example | | 8 | 9 | 10 | 11 |
|---|---|---|---|---|---|
| Molding Conditions | Steam Pressure in One-Way Flow Heating Step [MPa] | 2.2 | 2.2 | 2.2 | 2.2 |
| | Steam Pressure in Full Heating Step [MPa] | 3.2 | 3.2 | 3.2 | 3.2 |
| Moldability | Evaluation | B | B | A | A |
| Physical Properties of Molded Article | Apparent Density [kg/m³] | 57 | 54 | 57 | 58 |
| | Tensile Strength [kPa] | 880 | 850 | 880 | 890 |
| | Compressive Stress at 50% Strain [kPa] | 440 | 410 | 440 | 450 |

In Examples 1 to 7 and Comparative Examples 1 to 3, single-layer expanded beads were prepared.

In Example 1, the copolymer resin 1 and the recycled resin 1 with an ash content of 1.16 % by mass were blended at a mass ratio (copolymer resin 1:recycled resin 1) of 75:25. The resin particles showed good preparation stability, and in-mold molding of the resulting expanded beads was carried out successfully.

In Example 2, the copolymer resin 1 and the recycled resin 1 with a different ash content were blended at a mass ratio (copolymer resin 1:recycled resin 1) of 75:25, which was the same as in Example 1. The resin particles showed good preparation stability, and in-mold molding of the resulting expanded beads was carried out successfully.

In Example 3, the copolymer resin 1 and the recycled resin 1 with a different ash content were blended at a mass ratio (copolymer resin 1:recycled resin 1) of 50:50. The resin particles showed good preparation stability, and in-mold molding of the resulting expanded beads was carried out successfully.

In Example 4, the copolymer resin 1 and the recycled resin 2 were blended at a mass ratio (copolymer resin 1:recycled resin 2) of 85:15. The resin particles showed good preparation stability, and in-mold molding of the resulting expanded beads was carried out very successfully.

In Example 5, the copolymer resin 1 and the recycled resin 2 with a different ash content were blended at a mass ratio (copolymer resin 1:recycled resin 2) of 75:25. The resin particles showed good preparation stability, and in-mold molding of the resulting expanded beads was carried out successfully.

In Example 6, the copolymer resin 1 and the recycled resin 3 were blended at a mass ratio (copolymer resin 1:recycled resin 3) of 75:25. The resin particles showed good preparation stability, and in-mold molding of the resulting expanded beads was carried out successfully.

In Example 7, the copolymer resin 1 and the recycled resin 1 with a different ash content were blended at a mass ratio (copolymer resin 1:recycled resin 1) of 85:15. The resin particles showed good preparation stability, and in-mold molding of the resulting expanded beads was carried out successfully.

In Comparative Example 1, the copolymer resin 1 and the recycled resin 1 were blended with the amount of the copolymer resin 1 reduced, i.e., at a mass ratio (copolymer resin 1:recycled resin 1) of 25:75. Resin particles were able to be prepared, but the expansion property of the resin particles was so low that expanded beads were not able to be obtained. The hyphen in Tables 3 and 4 denotes "not measured".

In Comparative Example 2, the copolymer resin 1 and the recycled resin 1 with a different ash content were blended with the amount of the copolymer resin 1 reduced in the same manner as in Comparative Example 1, i.e., at a mass ratio (copolymer resin 1:recycled resin 1) of 25:75. Resin particles were able to be prepared, but the expansion property of the resin particles was so low that expanded beads were not able to be obtained.

In Comparative Example 3, the copolymer resin 1 and the recycled resin 1 were blended at a mass ratio (copolymer resin 1:recycled resin 1) of 75:25 in the same manner as in Example 1 except that the recycled resin 1 with a higher ash content was used. Resin particles were able to be prepared but expanded beads were able to be obtained, but the moldability of the expanded beads was so low that the range of vaper pressure in which molding was able to be carried out was extremely narrow.

In Examples 8 to 11, multilayer expanded beads were prepared.

In Example 8, the copolymer resin 1 and the recycled resin 1 with an ash content of 0.63% by mass were blended at a mass ratio (copolymer resin 1:recycled resin 1) of 85:15 to form an expanded core layer which was covered with a cover layer (core layer:cover layer = 95% by mass:5% by mass). The multilayer resin particles showed good preparation stability, and in-mold molding of the resulting expanded beads was carried out successfully.

In Example 9, the copolymer resin 1 and the recycled resin 1 with an ash content of 1.24% by mass were blended at a mass ratio (copolymer resin 1:recycled resin 1) of 75:25 in the same manner as in Example 1 to form an expanded core layer which was covered with a cover layer (core layer:cover layer = 95% by mass:5% by mass). The multilayer resin particles showed good preparation stability, and in-mold molding of the resulting expanded beads was carried out successfully.

In Example 10, the copolymer resin 1 and the recycled resin 2 with an ash content of 1% by mass were blended at a mass ratio (copolymer resin 1:recycled resin 2) of 85:15 in the same manner as in Example 8 to form an expanded core layer which was covered with a cover layer (core layer:cover layer = 95% by mass:5% by mass). The multilayer resin particles showed good preparation stability, and in-mold molding of the resulting multilayer expanded beads was carried out vary successfully.

In Example 11, the copolymer resin 1 and the recycled resin 2 with an ash content of 0.88% were blended at a mass ratio (copolymer resin 1:recycled resin 2) of 75:25 to form an expanded core layer which was covered with a cover layer (core layer:cover layer = 95% by mass :5% by mass). The multilayer resin particles showed good preparation stability, and in-mold molding of the resulting multilayer expanded beads was carried out vary successfully.

The preparation stability of the resin particles, and physical properties of the expanded beads and the expanded beads molded article were evaluated by the following methods.

### Measurement of ash content shown in Tables 2-1, 2-2 and 5:

The ash contents of the recycled polyolefin (II) and the resin particles were measured according to JIS K 6226-2. As the measuring device, a thermogravimetric analyzer TGA701 manufactured by LECO was used. The measurement sample (about 5 g) was taken and placed in a crucible, and a nitrogen stream was introduced into the heating furnace. Then, (1) the temperature in the heating furnace was increased from room temperature to 105°C at a rate of 10°C/min under a nitrogen atmosphere. Then, (2) the temperature was maintained at 105°C until the measure weight reached equilibrium. Then, (3) the temperature was increased from 105°C to 450°C at a rate of 10°C/min. Then, (4) the temperature was maintained at 450°C until the measured weight reaches equilibrium. Then, (5) the stream into the heating furnace was changed from nitrogen to air and the temperature was increased from 450°C to 950°C at a rate of 10°C/min. Then, (6) the temperature was maintained at 950°C for 10 minutes, and a weight of the combustion residue was obtained. Then, (7) the temperature was decreased to room temperature. The ash content was obtained by dividing the weight of the combustion residue obtained in step (6) by the weight of the measurement sample placed in the crucible and multiplying the quotient by 100.

### Preparation stability of resin particles shown in Tables 2-1, 2-2 and 5:

The preparation stability of the resin particles was evaluated based on the following criteria.
A: The discharge amount during extrusion was stable and the resin particles had uniform size according to visual inspection.
B: The discharge amount during extrusion was instable and the resin particles had variation in size according to visual inspection.

### Evaluation of moldability in Tables 4 and 7:

In-mold molding of the expanded beads was performed at various molding pressures changed in increments of 0.02 MPa(G) from the steam pressure shown in Tables 4 and 7 in the full heating. The pressure range throughout which molded articles showed acceptable results in all the evaluation items shown below (secondary expansion property, fusion bonding property and recovering ability) was determined. From the obtained pressure range, moldability was evaluated based on the following criteria:
A: The molding pressure range is 0.06 MPa(G) or more.
B: The molding pressure range is 0.04 MPa(G) or more and less than 0.06 MPa(G).
C: The molding pressure range is 0.02 MPa(G) or more and less than 0.04 MPa(G).
D: The molding pressure is less than 0.02 MPa(G).

The secondary expansion property, fusion bonding property and recovering ability were evaluated based on the following criteria.

### Secondary expansion property:

A 100 mm × 100 mm square was drawn at a central part of the expanded beads molded article, and a diagonal line was drawn from one of the corners of the square. The number of voids (gaps between expanded beads) which overlap with the diagonal line and larger than a square with a side of 1 mm was counted. A number of voids less than 5 was judged as acceptable.

### Fusion bonding property:

The expanded beads molded article was folded longitudinally into nearly equal halves and broken. The broken-out section exposed by this procedure was visually inspected, and the number of expanded beads separated at their interfaces and the number of expanded beads which underwent internal fracture were counted. Then, the rate of the expanded beads which underwent internal fracture to the number of expanded beads exposed in the broken-out section, that is, the sum of the number of expanded beads separated at their interfaces and the number of expanded beads which underwent internal fracture, was calculated. The value of the rate expressed in percentage was defined as the fusion bonding rate. A fusion bonding rate of 80% or more was judged as acceptable.

### Recovering ability:

The presence or absence of a sink mark, in other words, an area depressed from the surrounding area at the center of the expanded beads molded article, was evaluated. Specifically, the thickness of the obtained expanded beads molded article was measured at the center and four corners thereof, and the ratio of the thickness at the center to the thickness at the corner with the largest thickness was calculated. Based on the obtained thickness ratio, a thickness ratio of 99% or more was judged as acceptable.

### Bulk density of expanded beads shown in Tables 3 and 6:

The weight of about 500 cm³ of expanded beads left to stand at a temperature of 23°C, a relative humidity of 50% and an atmosphere of 1 atm for two days was measured. The expanded beads were placed in an empty 1 L measuring cylinder and the height of the expanded beads filled in the measuring cylinder was stabilized by lightly hitting the bottom of the measuring cylinder against the floor. Then, the volume V[L] of the expanded beads indicated by the tick mark of the measuring cylinder was measured. The bulk density of the expanded beads was obtained by dividing the weight W[g] of the expanded beads placed in the measuring cylinder by the volume V thereof.

### Average cell diameter of expanded beads shown in Tables 3 and 6:

The average cell diameter of the expanded beads was measured by the method already described before (n=10).

### Heat of fusion of high temperature peak shown in Tables 3 and 6:

Ten expanded beads were randomly sampled from the obtained expanded beads, and the heat of fusion of the high temperature peak of each expanded bead was measured by the following method. The arithmetic mean of the ten measurement values is defined as the heat of fusion of the high temperature peak of the expanded beads.

According to heat flux differential scanning calorimetry referenced in JIS K7122(1987), the heat of fusion was obtained from a high temperature peak in a first time DSC curve that was obtained when the sample was heated from 30°C to a temperature higher by 30°C than a melting peak end temperature at a heating rate of 10°C/min. As a measuring device, a high sensitivity differential scanning calorimeter "EXSTAR DSC7020" (manufactured by SII NanoTechnology) was used. The heat of fusion of the high temperature peak of the expanded beads corresponds to the area of a high temperature peak "b" that appears on a higher temperature side of an intrinsic melting peak "a" in the DSC curve shown in FIG. 1, and is determined as follows. First, as shown in FIG. 1, a straight line connecting a point α on the DSC curve at 80°C with a point β on the DSC curve at a melting end temperature T_{E} is drawn. A straight line which is orthogonal to the abscissa of the graph is drawn from a point γ at the bottom of the valley between the intrinsic melting peak "a" and the high temperature peak "b" on the DSC curve. This straight line crosses the straight line connecting the point α and the point β at a point δ. The area of the thus obtained region surrounded by the straight line connecting the point δ and point β, the straight line connecting the point γ and point δ, and the DSC curve from the point γ and the point β is defined as the heat of fusion of the high temperature peak of the expanded beads.

### Apparent density of expanded beads molded article shown in Tables 4 and 7:

The apparent density (g/L) of the expanded beads molded article was obtained by measuring the weight of the expanded beads molded article and dividing the weight by the apparent volume of the expanded beads molded article obtained by a water immersion method (water temperature 23°C).

### Tensile strength shown in Tables 4 and 7:

The tensile strength was measured according to JIS K6767(1999). A plate-like piece with a thickness of 10 mm was cut out of a center part of the expanded beads molded article such that the piece did not include a skin layer, and punched out into a dumbbell No.1 shape with a pressing machine to obtain a test piece. After having been conditioned in normal conditions for 24 hours, the test piece was tested at a test speed of 500 mm/min using an autograph AGS-X universal tester manufactured by Shimadzu Corporation to obtain its tensile strength. The maximum load obtained in the test was defined as the tensile strength of the expanded beads molded article and the average of measurements of five test pieces is shown in the table.

### Compressive stress at 50% strain shown in Tables 4 and 7:

A test piece without skin with a length of 50 mm, a width of 50 mm and a thickness of 25 mm was cut out of the expanded beads molded article, and a compression test was conducted at a compression rate of 10 mm/min according to JIS K6767(1999) to obtain the compressive stress at 50% strain of the expanded beads molded article. The test was conducted on five test pieces, and the average of the obtained values was shown in the table as the compressive stress at 50% strain. The compressive stress at 50% strain is an index of the stiffness of the expanded beads molded article.

## Claims

1. A process for producing resin expanded beads, comprising the steps of:
(a) melt-mixing a propylene-based random copolymer (I) having a melting point of 120°C or more and a recycled polyolefin-based resin (II) having a melting point of 125 to 170°C to obtain a molten resin mixture, the melting point of the polymers being measured according to the method in the description,
(b) processing the molten resin mixture into resin particles, and
(c) expanding the resin particles,
wherein said recycled polyolefin-based resin (II) originates from a recycled fishery material selected from fishery nets, fishing lines, fishery ropes and mixtures of two or more thereof and is in the form of pellets having an ash content of 3% by mass or less, and
wherein in step (a) 40 to 95% by mass of the propylene-based random copolymer (I) is mixed with 5 to 60% by mass of the recycled polyolefin-based resin (II) with the proviso that the total of the propylene-based random copolymer (I) and the recycled polyolefin-based resin (II) is 100% by mass.

2. The process for producing resin expanded beads according to claim 1,
wherein the propylene-based random copolymer (I) has a melt flow rate of 1 to 10 g/10 min as measured at a temperature of 230°C and a load of 2.16 kg, and the recycled polyolefin-based resin (II) has a melt flow rate that is lower than that of the propylene-based random copolymer (I) as measured at a temperature of 230°C and a load of 2.16 kg.

3. The process for producing resin expanded beads according to claim 1 or 2, wherein the recycled polyolefin-based resin (II) comprises a high density polyethylene resin having a melting point of 125 to 145°C.

4. The process for producing resin expanded beads according to any one of claims 1 to 3, wherein the resin expanded beads show at least two melting peaks on a first time DSC curve obtained when a measurement sample from the resin expanded beads is heated from 30°C to a first temperature higher by 30°C than a melting peak end temperature at a heating rate of 10°C/min according to heat flux differential scanning calorimetry referenced in JIS K7121 (1987), said at least two melting peaks including an intrinsic melting peak that is intrinsic to the base resin constituting the resin expanded beads, and a high temperature peak that has a peak top temperature higher than a peak top temperature of the intrinsic melting peak, and
wherein the resin expanded beads show the intrinsic melting peak but do not show a high temperature peak on a second time DSC curve obtained when the measurement sample, heated to said first temperature in the first time DSC curve measurement, is maintained at said first temperature for 10 minutes, then cooled to 30°C at a cooling rate of 10°C/min and again heated from 30°C to a second temperature higher by 30°C than a melting peak end temperature at a heating rate of 10°C/min according to heat flux differential scanning calorimetry referenced in JIS K7122(1987).

5. The process for producing resin expanded beads according to any one of claims 1 to 4, wherein step (b) is carried out in such a way that the obtained resin particles are multilayer resin particles each having a core layer containing the propylene-based random copolymer (I) and the recycled polyolefin-based resin (II), and a cover layer containing a polyolefin-based resin (III) and covering the core layer, and wherein in step (c) the core layers of the multilayer resin particles are expanded to give multilayer resin expanded beads.

6. The process for producing resin expanded beads according to any one of claims 1 to 5, wherein in step (c), the resin particles are expanded in such a way that the resin expanded beads have a bulk density of 10 to 100 kg/m³.

7. The process for producing resin expanded beads according to any one of claims 1 to 6, wherein the propylene-based random copolymer (I) has a melting point of 135 to 160°C.

## Patentansprüche

1. Verfahren zur Herstellung von harzgeschäumten Perlen, umfassend die folgenden Schritte:
(a) Schmelzmischen eines statistischen Copolymers auf Propylenbasis (I) mit einem Schmelzpunkt von 120°C oder mehr und eines rezyklierten Harzes auf Polyolefinbasis (II) mit einem Schmelzpunkt von 125 bis 170°C, um ein geschmolzenes Harzgemisch zu erhalten, wobei der Schmelzpunkt der Polymere gemäß dem Verfahren in der Beschreibung gemessen wird,
(b) Verarbeiten der geschmolzenen Harzmischung zu Harzteilchen, und
(c) Expandieren der Harzteilchen,
wobei das rezyklierte Harz auf Polyolefinbasis (II) von einem rezyklierten Fischereimaterial stammt, das ausgewählt ist aus Fischernetzen, Fischereileinen, Fischertauen und Mischungen von zwei oder mehr davon und in Form von Pellets mit einem Aschegehalt von 3 Massenprozent oder weniger vorliegt, und
wobei in Schritt (a) 40 bis 95 Massenprozent des statistischen Copolymers auf Propylenbasis (I) mit 5 bis 60 Massenprozent des rezyklierten Harzes auf Polyolefinbasis (II) gemischt werden, mit der Maßgabe, dass die Gesamtmenge des statistischen Copolymers auf Propylenbasis (I) und des rezyklierten Harzes auf Polyolefinbasis (II) 100 Massenprozent beträgt.

2. Verfahren zur Herstellung von harzgeschäumten Perlen nach Anspruch 1,
wobei das statistische Copolymer auf Propylenbasis (I) eine Schmelzflussrate von 1 bis 10 g/10 min aufweist, gemessen bei einer Temperatur von 230°C und einer Belastung von 2,16 kg, und das recycelte Harz auf Polyolefinbasis (II) eine Schmelzflussrate aufweist, die niedriger ist als die des statistischen Copolymers auf Propylenbasis (I), gemessen bei einer Temperatur von 230°C und einer Belastung von 2,16 kg..

3. Verfahren zur Herstellung von harzgeschäumten Perlen nach Anspruch 1 oder 2,
wobei das recycelte Harz auf Polyolefinbasis (II) ein Polyethylenharz hoher Dichte mit einem Schmelzpunkt von 125 bis 145°C umfasst.

4. Verfahren zur Herstellung von harzgeschäumten Perlen nach einem der Ansprüche 1 bis 3,
wobei die harzgeschäumten Perlen mindestens zwei Schmelzpeaks auf einer ersten DSC-Kurve zeigen, die erhalten wird, wenn eine Messprobe aus den harzgeschäumten Perlen von 30°C auf eine erste Temperatur erhitzt wird, die um 30°C höher ist als die Endtemperatur des Schmelzpeaks bei einer Erhitzungsrate von 10°C/min gemäß der Wärmefluss-Differential-Scanning-Kalorimetrie, die in JIS K7121(1987) beschrieben ist,
wobei die mindestens zwei Schmelzpeaks einen Eigenschmelzpeak, der dem Basisharz, das die harzgeschäumten Perlen bildet, eigen ist, und einen Hochtemperaturpeak, der eine Peakspitzentemperatur hat, die höher ist als eine Peakspitzentemperatur des Eigenschmelzpeaks, einschließen, und
wobei die harzgeschäumten Perlen den Eigenschmelzpeak zeigen, aber keinen Hochtemperaturpeak in einer zweiten Zeit-DSC-Kurve zeigen, die erhalten wird, wenn die Messprobe, die bei der ersten Zeit-DSC-Kurvenmessung auf die erste Temperatur erwärmt wird, 10 Minuten lang auf der ersten Temperatur gehalten wird, dann mit einer Abkühlungsrate von 10°C/min auf 30°C abgekühlt wird und erneut von 30°C auf eine zweite Temperatur erwärmt wird, die um 30°C höher ist als die Endtemperatur des Schmelzpeaks, und zwar mit einer Erwärmungsrate von 10°C/min gemäß der Wärmefluss-Differential-Scanning-Kalorimetrie, auf die in JIS K7122(1987) Bezug genommen wird.

5. Verfahren zur Herstellung von harzgeschäumten Perlen nach einem der Ansprüche 1 bis 4,
wobei Schritt (b) so durchgeführt wird, dass die erhaltenen Harzpartikel mehrschichtige Harzpartikel sind, die jeweils eine Kernschicht aufweisen, die das statistische Copolymer auf Propylenbasis (1) und das rezyklierte Harz auf Polyolefinbasis (II) enthält, und eine Deckschicht, die ein Harz auf Polyolefinbasis (III) enthält und die Kernschicht bedeckt, und
wobei in Schritt (c) die Kernschichten der mehrschichtigen Harzteilchen expandiert werden, um mehrschichtige harzgeschäumte Perlen zu erhalten.

6. Verfahren zur Herstellung von harzgeschäumten Perlen nach einem der Ansprüche 1 bis 5,
wobei in Schritt (c) die Harzpartikel so expandiert werden, dass die harzgeschäumten Perlen eine Schüttdichte von 10 bis 100 kg/m³ aufweisen.

7. Verfahren zur Herstellung von harzgeschäumten Perlen (Kügelchen) nach einem der Ansprüche 1 bis 6,
wobei das statistische Copolymer auf Propylenbasis (I) einen Schmelzpunkt von 135 bis 160°C hat.

## Revendications

1. Procédé de production de billes expansées en résine, comprenant les étapes suivantes :
(a) mélange à l'état fondu d'un copolymère aléatoire à base de propylène (I) ayant un point de fusion de 120 °C ou plus et d'une résine à base de polyoléfine recyclée (II) ayant un point de fusion allant de 125 à 170 °C pour obtenir un mélange de résine fondue, le point de fusion des polymères étant mesuré conformément au procédé décrit dans la description,
(b) transformation du mélange de résines fondues en particules de résine, et
(c) expansion des particules de résine,
dans lequel ladite résine recyclée à base de polyoléfine (II) provient d'un matériau de pêche recyclé choisi parmi les filets de pêche, les lignes de pêche, les cordes de pêche et les mélanges de deux ou plusieurs de ces matériaux et se présente sous la forme de granulés ayant une teneur en cendres de 3 % en masse ou moins, et
dans lequel, à l'étape (a), de 40 à 95 % en masse du copolymère aléatoire à base de propylène (I) est mélangé avec de 5 à 60 % en masse de la résine à base de polyoléfine recyclée (II), à condition que le total du copolymère aléatoire à base de propylène (I) et de la résine à base de polyoléfine recyclée (II) soit de 100 % en masse.

2. Procédé de fabrication de billes expansées en résine selon la revendication 1, dans lequel le copolymère aléatoire à base de propylène (I) a un débit de fusion allant de 1 à 10 g/10 min, mesuré à une température de 230 °C et à une charge de 2,16 kg, et la résine recyclée à base de polyoléfine (II) a un débit de fusion inférieur à celui du copolymère aléatoire à base de propylène (I), mesuré à une température de 230 °C et à une charge de 2,16 kg.

3. Procédé de fabrication de billes expansées en résine selon la revendication 1 ou la revendication 2, dans lequel la résine recyclée à base de polyoléfine (II) comprend une résine de polyéthylène haute densité ayant un point de fusion allant de 125 à 145 °C.

4. Procédé de fabrication de billes de résine expansée selon l'une quelconque des revendications 1 à 3, dans lequel les billes de résine expansée présentent au moins deux pics de fusion sur une première courbe DSC obtenue lorsqu'un échantillon de mesure des billes de résine expansée est chauffé de 30 °C à une première température supérieure de 30 °C à une température de fin de pic de fusion à une vitesse de chauffage de 10 °C/min selon la calorimétrie différentielle à balayage à flux thermique référencée dans la norme JIS K7121 (1987), lesdits au moins deux pics de fusion comprennent un pic de fusion intrinsèque qui est intrinsèque à la résine de base constituant les billes expansées en résine, et un pic à haute température dont la température maximale est supérieure à la température maximale du pic de fusion intrinsèque, et
dans lequel les billes de résine expansée présentent le pic de fusion intrinsèque mais ne présentent pas de pic de haute température sur une deuxième courbe DSC temporelle obtenue lorsque l'échantillon de mesure, chauffé à ladite première température lors de la première mesure de la courbe DSC temporelle, est maintenu à ladite première température pendant 10 minutes, puis refroidi à 30 °C à une vitesse de refroidissement de 10 °C/min et chauffé à nouveau de 30 °C à une deuxième température supérieure de 30 °C à une température de fin de pic de fusion à une vitesse de chauffage de 10 °C/min selon la calorimétrie différentielle à balayage à flux de chaleur référencée dans la norme JIS K7122(1987).

5. Procédé de fabrication de billes de résine expansée selon l'une quelconque des revendications 1 à 4, dans lequel l'étape (b) est réalisée de telle sorte que les particules de résine obtenues sont des particules de résine multicouches ayant chacune une couche centrale contenant le copolymère aléatoire à base de propylène (I) et la résine recyclée à base de polyoléfine (II), et une couche de couverture contenant une résine à base de polyoléfine (III) et recouvrant la couche centrale,
et dans lequel, à l'étape (c), les couches centrales des particules de résine multicouches sont expansées pour donner des billes de résine multicouches expansées.

6. Procédé de production de billes de résine expansée selon l'une quelconque des revendications 1 à 5, dans lequel, à l'étape (c), les particules de résine sont expansées de telle sorte que les billes de résine expansée ont une densité apparente allant de 10 à 100 kg/m³.

7. Procédé de fabrication de billes de résine expansée selon l'une quelconque des revendications 1 à 6, dans lequel le copolymère aléatoire à base de propylène (I) a un point de fusion allant de 135 à 160°C.
